# EUROPÄISCHE PATENTSCHRIFT

(11) **EP 1 848 562 B1**
(45) Veröffentlichungstag und Bekanntmachung des Hinweises auf die Patenterteilung: **01.06.2011**
(21) Anmeldenummer: 06704098.0
(22) Anmeldetag: 24.01.2006
(51) Int. Cl.: B23B 31/14

(54) **SPANNVORRICHTUNG FÜR EINEN ROTATIONSKÖRPER**
CLAMPING DEVICE FOR A ROTATING ELEMENT
DISPOSITIF DE SERRAGE POUR UN CORPS ROTATIF

(30) Priorität: 26.01.2005 DE 102005003701
(43) Veröffentlichungstag der Anmeldung: 31.10.2007
(73) Patentinhaber: AeroLas GmbH Aerostatische Lager-Lasertechnik, 82008 Unterhaching (DE)
(72) Erfinder: SLOTTA, Georg, 85375 Neufahrn (DE)
(74) Vertreter: Schlimme, Wolfram
(86) Internationale Anmeldenummer: PCT/EP2006/000624
(87) Internationale Veröffentlichungsnummer: WO 2006/079509

(56) Entgegenhaltungen:
- GB-A- 2 293 120
- US-A- 3 495 844
- US-A1- 2002 105 149

## Beschreibung

Die Erfindung betrifft eine Spannvorrichtung für einen Rotationskörper gemäß dem Oberbegriff des Patentanspruchs 1.

Derartige Spannvorrichtungen sind allgemein bekannt und finden als spannvorrichtungen für Rotationswerkzeuge an Werkzeugmaschinen Verwendung. Es ist auch bereits bekannt, fliehkraftunterstützte Spannvorrichtungen bei automatischen Werkzeugmaschinen einzusetzen.

Aus der US-A-3495844 ist eine gattungsgemäße Spannvorrichtung bekannt. Bei dieser bekannten Spannvorrichtung ist der jeweilige Außenumfang der axialen Endabschnitte doppelkonusförmig ausgebildet, wobei am Ort des größten Radius' eine Umfangslinie gebildet ist, die in Kontakt mit der Aufnahmebohrung für die Spannvorrichtung steht und ein Kippgelenk des jeweiligen Endabschnitts bildet.

Aufgabe der vorliegenden Erfindung ist es, eine gattungsgemäße Spannvorrichtung so auszugestalten, daß sie bei kompaktem Aufbau automatisch eine drehzahlabhängige Spannkraft aufbaut. Diese Aufgabe wird durch die im Patentanspruch 1 angegebene Spannvorrichtung gelöst.

Bei der Spannvorrichtung gemäß der vorliegenden Erfindung weist der erste Endabschnitt einen radial äußeren Bereich auf, der über einen Gelenkabschnitt mit dem zugeordneten radial inneren Bereich verbunden ist. Der zweite Endabschnitt weist einen radial äußeren Bereich auf, der über einen weiteren Gelenkabschnitt mit dem zugeordneten radial inneren Bereich verbunden ist. Zudem ist einer der radial äußeren Bereiche in Axialrichtung verschiebbar, während der andere radial äußere Bereich in Axialrichtung stationär ist.

Durch den besonderen Aufbau der Spannhülse mit den in den axialen Endabschnitten vorgesehenen Spannflächen für den Schaftabschnitt des Rotationskörpers und den über Gelenkabschnitte mit den Endabschnitten verbundenen Mittelabschnitt mit einer Trägheitsmasse wird der Mittelabschnitt beim Aufbringen einer Drehzahl auf die Spannhülse und damit von einer auf die Trägheitsmasse wirkenden Fliehkraft radial nach außen gezogen, wodurch die radial inneren Bereiche des jeweiligen Endabschnitts radial einwärts bewegt werden und so die Klemmung des Schaftabschnitts im Bereich der Spannflächen erhöht wird.

Vorzugsweise sind der dritte Gelenkabschnitt und der vierte Gelenkabschnitt jeweils von einem ringförmigen Steg gebildet, der in Axialrichtung betrachtet zwischen der Spannfläche des zugeordneten Endabschnitts und dem benachbarten ersten beziehungsweise zweiten Gelenkabschnitt liegt.

Vorzugsweise ist der jeweilige Gelenkabschnitt gebildet von einem Bereich mit einem gegenüber dem jeweiligen Endabschnitt und dem Mittelabschnitt verringerten Durchmesser. Dabei weist der jeweilige Bereich mit verringertem Durchmesser bevorzugt eine umlaufende Nut auf.

In einer bevorzugten Ausführungsform erstreckt sich der jeweilige radiale Schlitz über den gesamten Durchmesser der Spannhülse. Dadurch wird die radiale Beweglichkeit der einzelnen durch den Schlitz voneinander abgeteilten Abschnitte der Spannhülse erleichtert und damit die Wirksamkeit des Aufbringens einer Spannkraft von der Spannfläche auf den Schaftabschnitt des Rotationskörpers verbessert.

Besonders bevorzugt ist dabei eine Variante, bei der die Spannhülse eine Mehrzahl von radialen Schlitzen aufweist, die jeweils in einer durch die Längsachse der Spannhülse verlaufenden Ebene liegen. Diese weitere Unterteilung der Spannhülse verbessert die radiale Bewegbarkeit und erhöht somit die Wirksamkeit des Aufbringens einer Spannkraft.

Vorzugsweise sind dabei die Ebenen der Schlitze in Umfangsrichtung in gleichmäßigem Winkelabstand zueinander versetzt angeordnet. Diese gleichmäßige Verteilung der Schlitze über den Umfang führt zu einer Vergleichmäßigung der entlang des Innenumfangs auf den Schaftabschnitt des Rotationskörpers aufgebrachten Spannkraft.

Eine bevorzugte Weiterbildung der Spannvorrichtung zeichnet sich dadurch aus, daß eine erste Gruppe von Schlitzen an der Stirnseite des ersten axialen Endabschnitts der Spannhülse mündet und sich die Schlitze bis in den zweiten axialen Endabschnitt erstrecken und daß eine zweite Gruppe von Schlitzen an der Stirnseite des zweiten axialen Endabschnitts der Spannhülse mündet und sich die Schlitze bis in den ersten axialen Endabschnitt erstrecken. Diese Ausführungsform maximiert die radiale Bewegbarkeit der einzelnen von den Schlitzen unterteilten Abschnitte der Spannhülse, ohne dabei die Formstabilität der Spannhülse im unbelasteten Zustand zu sehr zu beeinträchtigen.

Vorzugsweise sind dabei die Schlitze der ersten Gruppe in Umfangsrichtung zwischen den Schlitzen der zweiten Gruppe angeordnet.

Die Erfindung wird nachfolgend anhand eines Beispiels unter Bezugnahme auf die Zeichnung näher erläutert; in dieser zeigt:
- **Fig. 1**: eine schematische Prinzipdarstellung der erfindungsgemäßen Spannvorrichtung im Ruhezustand,
- **Fig. 2**: eine schematische Prinzipdarstellung der erfindungsgemäßen Spannvorrichtung unter Fliehkrafteinfluß,
- **Fig. 3**: eine schematische Prinzipdarstellung der erfindungsgemäßen Spannvorrichtung beim Aufbringen einer Öffnungskraft,
- **Fig. 4**: einen Längsschnitt durch eine erfindungsgemäße Spannvorrichtung,
- **Fig. 5**: einen Längsschnitt durch eine geschlitzte Spannhülse und
- **Fig. 6**: eine perspektivische Darstellung einer Spannhülse der erfindungsgemäßen Spannvorrichtung.

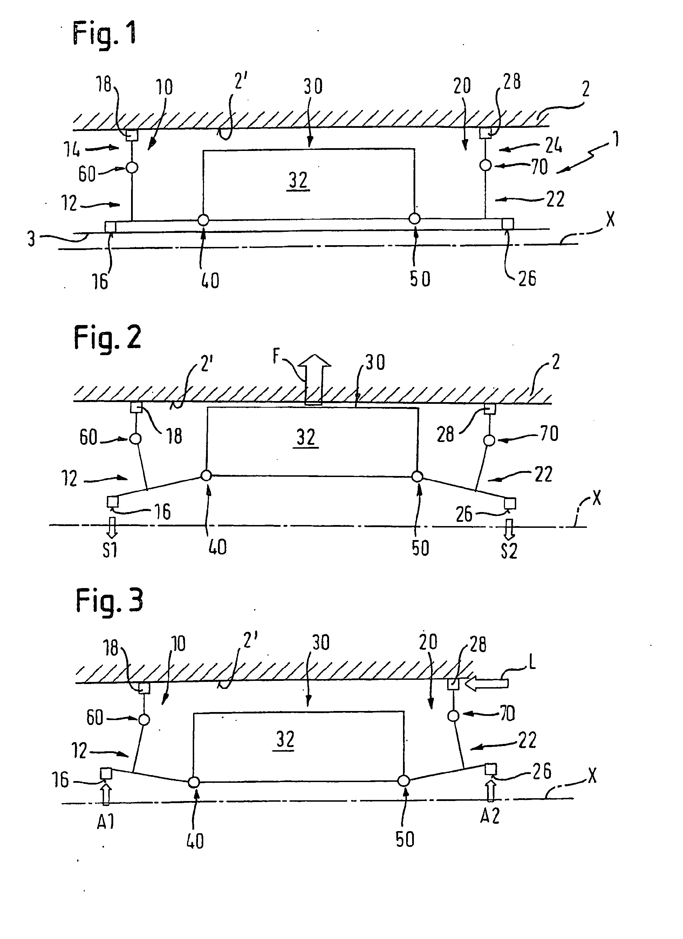

Die Fig. 1 bis 3 zeigen in schematischer Weise die obere Hälfte eines Längsschnitts durch eine erfindungsgemäße Spannvorrichtung, wobei der nicht dargestellte untere Bereich spiegelsymmetrisch dazu ausgebildet ist.

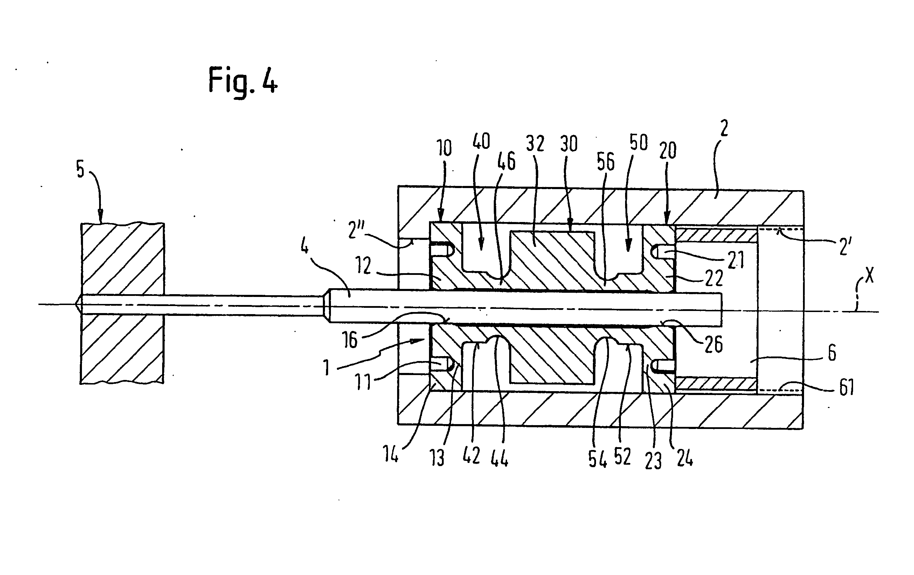

In Fig. 1 ist die Spannvorrichtung im Ruhezustand gezeigt. Eine Spannhülse 1 ist in einem Gehäuse 2 der Spannvorrichtung aufgenommen und radial und axial fixiert. Die Spannhülse 1 ist entlang ihrer Längsachse X mit einer Axialbohrung 3 zur Aufnahme des Schaftabschnitts 4 eines von der Spannvorrichtung einspannbaren Rotationskörpers 5 versehen (Fig. 4).

Die Spannhülse 1 weist an ihrem ersten axialen Ende einen ersten axialen Endabschnitt 10, einen am anderen axialen Ende der Spannhülse 1 gelegenen zweiten axialen Endabschnitt 20 und einen zwischen den beiden axialen Endabschnitten 10, 20 gelegenen Mittelabschnitt 30 auf. Der Mittelabschnitt 30 weist eine Trägheitsmasse 32 auf.

Zwischen dem Mittelabschnitt 30 und dem ersten Endabschnitt 10 ist ein erster Gelenkabschnitt 40 vorgesehen, der eine Winkelbewegung zwischen dem ersten axialen Endabschnitt 10 und dem Mittelabschnitt 30 um eine Achse quer zur die Längsachse X der Spannhülse 1 aufweisenden Schnittebene zuläßt.

Zwischen dem Mittelabschnitt 30 und dem zweiten Endabschnitt 20 ist ein zweiter Gelenkabschnitt 50 vorgesehen, der eine Winkelbewegung zwischen dem zweiten axialen Endabschnitt 20 und dem Mittelabschnitt 30 um eine Achse quer zur die Längsachse X der Spannhülse 1 aufweisenden Schnittebene zuläßt.

Die Gelenkabschnitte 40, 50 sind schematisch durch Kreise dargestellt.

Der erste axiale Endabschnitt 10 weist einen radial inneren Bereich 12 und einen radial äußeren Bereich 14 auf. Zwischen dem radial inneren Bereich 12 und dem radial äußeren Bereich 14 ist ein dritter Gelenkabschnitt 60 vorgesehen, der eine Winkelbewegung zwischen dem radial inneren Bereich 12 und dem radial äußeren Bereich 14 um eine Achse quer zur die Längsachse X der Spannhülse aufweisenden Schnittebene zuläßt. An dem die Axialbohrung 3 umgebenden Innenumfang des radial inneren Bereichs 12 ist eine erste Spannfläche 16 für den Schaftabschnitt 4 eines von der Spannvorrichtung einspannbaren Rotationskörpers 5 vorgesehen.

Der radial äußere Bereich 14 stützt sich mit einem Auflager 18 radial gegen den Innenumfang einer im Gehäuse 2 vorgesehenen Aufnahmebohrung 2' für die Spannhülse 1 ab. Das Auflager 18 fixiert die Spannhülse 1 zudem in Axialrichtung am Gehäuse 2.

Der zweite axiale Endabschnitt 20 weist einen radial inneren Bereich 22 und einen radial äußeren Bereich 24 auf. Zwischen dem radial inneren Bereich 22 und dem radial äußeren Bereich 24 ist ein vierter Gelenkabschnitt 70 vorgesehen, der eine Winkelbewegung zwischen dem radial inneren Bereich 22 und dem radial äußeren Bereich 24 um eine Achse quer zur die Längsachse X der Spannhülse aufweisenden Schnittebene zuläßt.

An dem die Axialbohrung 3 umgebenden Innenumfang des radial inneren Bereichs 22 ist eine zweite Spannfläche 26 für den Schaftabschnitt 4 des von der Spannvorrichtung einspannbaren Rotationskörpers 5 vorgesehen.

Der radial äußere Bereich 24 stützt sich mit einem Auflager 28 radial gegen den Innenumfang der im Gehäuse 2 vorgesehenen Aufnahmebohrung 2' für die Spannhülse 1 ab. Das Auflager 28 ist in Axialrichtung verschiebbar.

Die Funktionsweise der erfindungsgemäßen Spannvorrichtung wird anhand der Fig. 2 und 3 nachstehend erläutert.

Die Fig. 2 zeigt eine der Fig. 1 entsprechende schematische Darstellung der erfindungsgemäßen Spannvorrichtung 1 während einer Rotation um die Achse X, wobei auf die Trägheitsmasse 32 im Mittelabschnitt 30 eine Fliehkraft F in Radialrichtung nach außen wirkt. Die dadurch hervorgerufene radiale Auswärtsbewegung der Trägheitsmasse 32 bewegt auch die Gelenkabschnitte 40, 50 in Radialrichtung auswärts. Da die radial inneren Bereiche 12, 22 aufgrund der Abstützung des ersten axialen Endabschnitts 10 sowie des zweiten axialen Endabschnitts 20 am Gehäuse 2 nicht mit in Radialrichtung auswandern können, schwenken der erste radial innere Bereich 12 entgegen dem Uhrzeigersinn um den dritten Gelenkabschnitt 60 und der zweite radial innere Bereich 22 um den Gelenkabschnitt 70 im Uhrzeigersinn. Dadurch werden die erste Spannfläche 16 und die zweite Spannfläche 26 radial einwärts in Richtung auf die Längsachse X hin bewegt. Ist in die Axialbohrung 3 ein Schaftabschnitt 4 eines Rotationskörpers 5 eingesetzt, so sind die daran anliegende erste Spannfläche 16 und zweite Spannfläche 26 an dieser radialen Einwärtsbewegung gehindert und bauen eine zur Fliehkraft F proportionale Spannkraft S1 beziehungsweise S2 auf, die jeweils an der Spannfläche 16 beziehungsweise 26 radial einwärts wirkt. Dabei bewirkt die fliehkraftbedingte radiale Auswärtsbewegung der Trägheitsmasse 32 eine elastische Verformung in der Spannhülse 1, insbesondere in den Gelenkabschnitten 40, 50, wie weiter unten noch ausgeführt wird.

Der radial auswärts gerichtete Weg der Trägheitsmasse 32 ist durch die Gehäusebohrung 2' begrenzt, so daß die Trägheitsmasse 32 bei einer bestimmten Größe der Fliehkraft F am Innenumfang der Gehäusebohrung 2' zur Anlage kommt. In diesem Zustand ist die maximale Spannkraft S1 beziehungsweise S2 erreicht, da auch bei weiterer Drehzahlsteigerung der Rotation um die Achse X die Trägheitsmasse 32 nicht weiter radial auswärts wandern kann und die durch die Drehzahlsteigerung zusätzlich aufgebaute Fliehkraft unmittelbar von der Innenwand der Gehäusebohrung 2' abgestützt wird.

In Fig. 3 ist ein Bewegungsablauf zum Öffnen der Einspannung eines Schaftabschnitts innerhalb der Spannflächen 16, 26 gezeigt. Das axial verschiebbare Auflager 28 des radial äußeren Bereichs 24 des zweiten axialen Endabschnitts 20 wird von einer in Axialrichtung zum Mittelabschnitt 30 hin gerichteten Lösekraft L verschoben. Da die Spannhülse 1 am Auflager 18 des radial äußeren Bereichs 14 des ersten axialen Endabschnitts 10 in Axialrichtung eingespannt ist, bewegen sich der zweite axiale Endabschnitt 20 und der Mittelabschnitt 30 in Richtung auf den stationären ersten axialen Endabschnitt 10, also in Fig. 3 nach links. Der radial innere Bereich 22 des zweiten axialen Endabschnitts 20 schwenkt dabei um den vierten Gelenkabschnitt 70 entgegen dem Uhrzeigersinn, wobei gleichzeitig der radial innere Bereich 12 des ersten axialen Endabschnitts 10 um den dritten Gelenkabschnitt 60 im Uhrzeigersinn schwenkt. Diese beiden Schwenkbewegungen führen dazu, daß sich die erste Spannfläche 16 am ersten axialen Endabschnitt 10 und die zweite Spannfläche 26 am zweiten axialen Endabschnitt 20 radial auswärts bewegen, wie durch die beiden Pfeile A1 und A2 in Fig. 3 dargestellt ist. Hierdurch wird die jeweilige Spannkraft aufgehoben und ein in der Axialbohrung 3 aufgenommener Schaftabschnitt 4 eines einspannbaren Rotationskörpers 5 wird freigegeben, so daß der Rotationskörper in Axialrichtung aus der Axialbohrung 3 herausgenommen werden kann.

Analog ist auch das Einführen eines Schaftabschnitts eines Rotationskörpers in die Axialbohrung 3 möglich, wobei danach durch Bewegung des Auflagers 28 des zweiten axialen Endabschnitts in Axialrichtung nach außen entgegen dem Pfeil L in Fig. 3 eine radiale Vorspannung auf den Schaftabschnitt mittels der Spannflächen 16 und 26 aufgebracht werden kann.

Fig. 4 zeigt einen Längsschnitt durch eine erfindungsgemäße Spannvorrichtung. Das Gehäuse 2 ist zylindrisch ausgebildet und mit der am einen Ende des Gehäuses offenen Axialbohrung 2' versehen. Am anderen Ende des Gehäuses ist in der Stirnwand des Gehäuses eine Axialbohrung 2" von geringerem Durchmesser vorgesehen.

Die Spannhülse 1 ist in die Axialbohrung 2' des Gehäuses eingesetzt und liegt in Axialrichtung gegen die mit der kleineren Axialbohrung 2" versehene Gehäusestirnwand an. Auf der von der Gehäusestirnwand abgewandten Seite der in die Gehäusebohrung 2' eingesetzten Spannhülse ist eine Arretierungshülse 6 in die Gehäusebohrung 2' eingesetzt. Die Arretierungshülse 6 liegt an der Spannhülse 1 an und ist auf dem Fachmann bekannte Weise, beispielsweise über eine Gewindeverbindung 61, in der Gehäusebohrung 2' axial fixiert.

Die Arretierungshülse 6 ist rohrförmig ausgebildet, wobei die erste ringförmige Stirnseite der Arretierungshülse 6 gegen den radial äußeren Bereich 24 des zweiten axialen Endabschnitts 20 der Spannhülse 1 anliegt.

Der erste Gelenkabschnitt 40 zwischen dem ersten axialen Endabschnitt 10 und dem die Trägheitsmasse 32 aufweisenden Mittelabschnitt 30 der Spannhülse 1 ist von einem Bereich 42 mit einem gegenüber dem ersten Endabschnitt 10 und dem Mittelabschnitt 30 verringerten Durchmesser gebildet, wobei in diesem Bereich 42 eine erste umlaufende Nut 44 vorgesehen ist. Durch die erste umlaufende Nut 44 wird ein erster ringförmiger Abschnitt 46 mit minimalem Durchmesser geschaffen, der das Gelenk des ersten Gelenkabschnitts 40 bildet.

Der zweite Gelenkabschnitt 50 zwischen dem zweiten axialen Endabschnitt 20 und dem die Trägheitsmasse 32 aufweisenden Mittelabschnitt 30 der Spannhülse 1 ist von einem Bereich 52 mit einem gegenüber dem zweiten axialen Endabschnitt 20 und dem Mittelabschnitt 30 verringerten Durchmesser gebildet, 10 wobei in diesem Bereich 52 eine zweite umlaufende Nut 54 vorgesehen ist. Durch die zweite umlaufende Nut 54 wird ein zweiter ringförmiger Abschnitt 56 mit minimalem Durchmesser geschaffen, der das Gelenk des zweiten Gelenkabschnitts 50 bildet.

Die durch die fliehkraftbedingte radiale Auswärtsbewegung der Trägheitsmasse 32 bewirkte elastische Verformung der Spannhülse 1 tritt insbesondere in den Bereichen 42, 52 mit verringertem Durchmesser auf. Aus der Größe dieser Verformung ergibt sich die Steifigkeit der Spannvorrichtung im gespannten Zustand.

Der erste Endabschnitt 10 ist zwischen seinem radial inneren Bereich 12 und seinem radial äußeren Bereich 14 mit einer an der Stirnseite mündenden ringförmigen Nut 11 versehen, die die Axialerstreckung des ersten axialen Endabschnitts 10 in diesem Bereich bis auf einen ersten schmalen ringförmigen Steg 13 reduziert, der das Gelenk des dritten Gelenkabschnitts 60 bildet. Der erste ringförmige Steg 13 liegt in Axialrichtung betrachtet zwischen der ersten spannfläche 16 und dem ersten Gelenkabschnitt 40.

Der zweite Endabschnitt 20 ist zwischen seinem radial inneren Bereich 22 und seinem radial äußeren Bereich 24 mit einer an der Stirnseite mündenden ringförmigen Nut 21 versehen, die die Axialerstreckung des zweiten axialen Endabschnitts 20 in diesem Bereich bis auf einen zweiten schmalen ringförmigen Steg 23 reduziert, der das Gelenk des vierten Gelenkabschnitts 70 bildet. Der zweite ringförmige Steg 23 liegt in Axialrichtung betrachtet zwischen der zweiten Spannfläche 26 und dem zweiten Gelenkabschnitt 50.

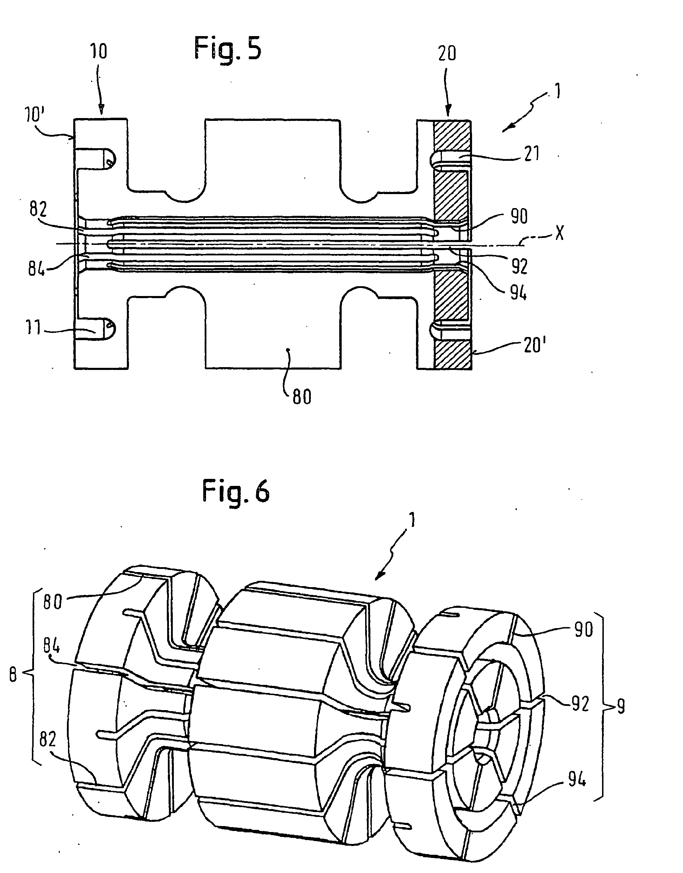

Fig. 5 zeigt einen Längsschnitt durch die Spannhülse 1, der um einige Winkelgrad um die Achse X gegenüber dem Längsschnitt in Fig. 4 gedreht ist. Der Schnitt verläuft durch einen ersten Längsschlitz 80 der Spannhülse 1, der sich ausgehend von der Stirnseite 10' am freien Ende des ersten axialen Endabschnitts 10 über den gesamten Durchmesser der Spannhülse 1 und in Richtung der Längsachse X bis hinein in den zweiten Endabschnitt 20 so weit erstreckt, daß der erste Längsschlitz 80 in die Ringnut 21 des zweiten axialen Endabschnitts 20 mündet.

Wie in der perspektivischen Darstellung der Fig. 6 zu erkennen ist, ist eine erste Gruppe 8 derartiger erster Längsschlitze 80, 82, 84 vorgesehen, die den ersten axialen Endabschnitt 10 in sechs gleich große Kreissektoren unterteilen.

Zwischen jeweils zwei benachbarten dieser ersten Längsschlitze 80, 82, 84 ist jeweils ein zweiter Längsschlitz 90, 92, 94 einer zweiten Gruppe 9 von Längsschlitzen vorgesehen, der von der axialen Stirnwand 20' am freien Ende des zweiten axialen Endabschnitts 20 ausgeht und sich über die gesamte Radialerstreckung der Spannhülse 1 in Richtung der Längsachse X bis hinein in den ersten axialen Endabschnitt 10 erstreckt und dort in die ringförmige Nut 11 mündet. Die Längsschlitze 90, 92, 94 der zweiten Gruppe 9 unterteilen den zweiten axialen Endabschnitt in sechs gleich große Kreissektoren.

Die ersten Längsschlitze 80, 82, 84 und die zweiten Längsschlitze 90, 92, 94 sind in Umfangsrichtung der Spannhülse 1 gesehen jeweils um den gleichen Winkel beabstandet.

Durch diese Anordnung der ersten Längsschlitze 80, 82, 84 und der zweiten Längsschlitze 90, 92, 94 sind die jeweiligen, die Gelenkabschnitte 40, 50, 60, 70 bildenden ringförmigen Abschnitte 46, 56, 13, 23 von den jeweiligen Längsschlitzen 80, 82, 84, 90, 92, 94 durchschnitten, so daß die zugehörigen Gelenkabschnitte 40, 50, 60, 70 jeweils nur aus einem Segment des zugeordneten ringförmigen Abschnitts 46, 56, 13, 23 bestehen und dadurch ihre Gelenkigkeit erhalten.

Die Erfindung ist nicht auf das obige Ausführungsbeispiel beschränkt, das lediglich der allgemeinen Erläuterung des Kerngedankens der Erfindung dient. Im Rahmen des durch die Ansprüche definierten Schutzumfangs kann die erfindungsgemäße Vorrichtung vielmehr auch andere als die oben beschriebenen Ausgestaltungsformen annehmen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Spannvorrichtung für einen Rotationskörper, mit
- einem zur Rotation um eine Achse (X) antreibbaren Gehäuse (2) und
- einer im Gehäuse (2) vorgesehenen Spannhülse (1),
- wobei die Spannhülse (1) eine Axialbohrung (3) zur Aufnahme eines Schaftabschnitts (4) des Rotationskörpers (5) aufweist,
- wobei die Spannhülse (1) einen ersten axialen Endabschnitt (10) mit einem radial inneren Bereich (12) aufweist, dessen die Axialbohrung (3) umgebender Innenumfang eine erste Spannfläche (16) für den Schaftabschnitt (4) des Rotationskörpers (5) bildet,
- wobei die Spannhülse (1) einen zweiten axialen Endabschnitt (20) mit einem radial inneren Bereich (22) aufweist, dessen die Axialbohrung (3) umgebender Innenumfang eine zweite Spannfläche (26) für den Schaftabschnitt (4) des Rotationskörpers (5) bildet,
- wobei die Spannhülse (1) einen zwischen dem ersten und dem zweiten axialen Endabschnitt gelegenen, eine Trägheitsmasse (32) umfassenden Mittelabschnitt (30) aufweist,
- wobei zwischen dem ersten axialen Endabschnitt (10) und dem Mittelabschnitt (30) ein erster Gelenkabschnitt (40) vorgesehen ist,
- wobei zwischen dem Mittelabschnitt (30) und dem zweiten axialen Endabschnitt (20) ein zweiter Gelenkabschnitt (50) vorgesehen ist, und
- wobei die Spannhülse (1) im ersten axialen Endabschnitt (10), im zweiten axialen Endabschnitt (20) und im Mittelabschnitt (30) mit zumindest einem radialen Schlitz (80, 82, 84; 90, 92, 94) versehen ist,
**dadurch gekennzeichnet,**
- **daß** der erste Endabschnitt (10) einen radial äußeren Bereich (14) aufweist, der über einen dritten Gelenkabschnitt (60) mit dem zugeordneten radial inneren Bereich (12) verbunden ist, und/oder
- **daß** der zweite Endabschnitt (20) einen radial äußeren Bereich (24) aufweist, der über einen vierten Gelenkabschnitt (70) mit dem zugeordneten radial inneren Bereich (22) verbunden ist, und
- **daß** einer der radial äußeren Bereiche (24) in Axialrichtung verschiebbar ist, während der andere radial äußere Bereich (14) in Axialrichtung stationär ist.

2. Spannvorrichtung nach Anspruch 1,
**dadurch gekennzeichnet,**
**daß** der dritte Gelenkabschnitt (60) und der vierte Gelenkabschnitt (70) jeweils von einem ringförmigen Steg (13; 23) gebildet sind, der in Axialrichtung betrachtet zwischen der Spannfläche (16; 26) des zugeordneten axialen Endabschnitts (10; 20) und dem benachbarten ersten beziehungsweise zweiten Gelenkabschnitt (40; 50) liegt.

3. Spannvorrichtung nach Anspruch 1 oder 2,
**dadurch gekennzeichnet,**
**daß** der jeweilige Gelenkabschnitt (40; 50) gebildet ist von einem Bereich (46; 56) mit einem gegenüber dem jeweiligen Endabschnitt (10; 20) und dem Mittelabschnitt (30) verringerten Durchmesser.

4. Spannvorrichtung nach Anspruch 3,
**dadurch gekennzeichnet,**
**daß** der jeweilige Bereich (46; 56) mit verringertem Durchmesser eine umlaufende Nut (44; 54) aufweist.

5. Spannvorrichtung nach einem der vorhergehenden Ansprüche, **dadurch gekennzeichnet,**
**daß** sich der jeweilige radiale Schlitz (80, 82, 84; 90, 92, 94) über den gesamten Durchmesser der Spannhülse (1) erstreckt.

6. Spannvorrichtung nach Anspruch 5,
**dadurch gekennzeichnet,**
**daß** die Spannhülse (1) eine Mehrzahl von radialen Schlitzen (80, 82, 84; 90, 92, 94) aufweist, die jeweils in einer durch die Längsachse (X) der Spannhülse (1) verlaufenden Ebene liegen.

7. Spannvorrichtung nach Anspruch 6,
**dadurch gekennzeichnet,**
**daß** die Ebenen der Schlitze (80, 82, 84; 90, 92, 94)in Umfangsrichtung in gleichmäßigem Winkelabstand zueinander versetzt angeordnet sind.

8. Spannvorrichtung nach Anspruch 5, 6 oder 7,
**dadurch gekennzeichnet,**
- **daß** eine erste Gruppe (8) von Schlitzen (80, 82, 84) an der Stirnseite des ersten axialen Endabschnitts (10) der Spannhülse (1) mündet und sich die Schlitze (80, 82, 84) bis in den zweiten axialen Endabschnitt (20) erstrecken und
- **daß** eine zweite Gruppe (9) von Schlitzen (90, 92, 94) an der Stirnseite des zweiten axialen Endabschnitts (20) der Spannhülse (1) mündet und sich die Schlitze (90, 92, 94) bis in den ersten axialen Endabschnitt (10) erstrecken.

9. Spannvorrichtung nach Anspruch 8,
**dadurch gekennzeichnet,**
**daß** die Schlitze (80, 82, 84) der ersten Gruppe (8) in Umfangsrichtung zwischen den Schlitzen (90, 92, 94) der zweiten Gruppe (9) angeordnet sind.

## Claims

1. Clamping device for a rotational body, comprising
- a housing (2) that may be set in rotation about an axis (X) and
- a clamping sleeve (1) provided in the housing (2),
- wherein the clamping sleeve (1) has an axial bore (3) for receiving a shank portion (4) of the rotational body (5),
- wherein the clamping sleeve (1) comprises a first axial end portion (10) having a radially inner region (12), of which the inner periphery surrounding the axial bore (3) forms a first clamping face (16) for the shank portion (4) of the rotational body (5),
- wherein the clamping sleeve (1) comprises a second axial end portion (20) having a radially inner region (22), of which the inner periphery surrounding the axial bore (3) forms a second clamping face (26) for the shank portion (4) of the rotational body (5),
- wherein the clamping sleeve (1) comprises a central portion (30), which is situated between the first and the second axial end portion and comprises an inertial mass (32),
- wherein between the first axial end portion (10) and the central portion (30) a first articulated portion (40) is provided,
- wherein between the central portion (30) and the second axial end portion (20) a second articulated portion (50) is provided, and
- wherein the clamping sleeve (1) in the first axial end portion (10), in the second axial end portion (20) and in the central portion (30) is provided with at least one radial slot (80, 82, 84; 90, 92, 94),
**characterized in**
- **that** the first end portion (10) comprises a radially outer region (14), which is connected by a third articulated portion (60) to the associated radially inner region (12), and/or
- **that** the second end portion (20) comprises a radially outer region (24), which is connected by a fourth articulated portion (70) to the associated radially inner region (22), and
- **that** one of the radially outer regions (24) is displaceable in axial direction, while the other radially outer region (14) is stationary in axial direction.

2. Clamping device according to claim 1,
**characterized in**
**that** the third articulated portion (60) and the fourth articulated portion (70) are formed in each case by an annular web member (13; 23) that, viewed in axial direction, lies between the clamping face (16; 26) of the associated axial end portion (10; 20) and the adjacent first and/or second articulated portion (40; 50).

3. Clamping device according to claim 1 or 2,
**characterized in**
**that** the respective articulated portion (40; 50) is formed by a region (46; 56) having a reduced diameter compared to the respective end portion (10; 20) and the central portion (30).

4. Clamping device according to claim 3,
**characterized in**
**that** the respective region (46; 56) of reduced diameter comprises a surrounding groove (44; 54).

5. Clamping device according to one of the preceding claims,
**characterized in**
**that** the respective radial slot (80, 82, 84; 90, 92, 94) extends over the entire diameter of the clamping sleeve (1).

6. Clamping device according to claim 5,
**characterized in**
**that** the clamping sleeve (1) comprises a plurality of radial slots (80, 82, 84; 90, 92, 94) that lie in each case in a plane extending through the longitudinal axis (X) of the clamping sleeve (1).

7. Clamping device according to claim 6,
**characterized in**
**that** the planes of the slots (80, 82, 84; 90, 92, 94) are arranged offset in peripheral direction at a uniform angular distance from one another.

8. Clamping device according to claim 5, 6 or 7,
**characterized in**
- **that** a first group (8) of slots (80, 82, 84) opens out at the end face of the first axial end portion (10) of the clamping sleeve (1) and the slots (80, 82, 84) extend as far as into the second axial end portion (20) and
- **that** a second group (9) of slots (90, 92, 94) opens out at the end face of the second axial end portion (20) of the clamping sleeve (1) and the slots (90, 92, 94) extends as far as into the first axial end portion (10).

9. Clamping device according to claim 8,
**characterized in**
**that** the slots (80, 82, 84) of the first group (8) are arranged in peripheral direction between the slots (90, 92, 94) of the second group (9).

## Revendications

1. Dispositif de serrage pour un corps en rotation, comprenant
- un boîtier (2) capable d'être entraîné en rotation autour d'un axe (X), et
- une douille de serrage (1) prévue dans le boîtier (2),
- dans lequel la douille de serrage (1) comporte un perçage axial (3) pour la réception d'un tronçon de tige (4) du corps en rotation (5),
- dans lequel la douille de serrage (10) comprend un premier tronçon terminal axial (10) avec une région radiale intérieure (12) dont la périphérie intérieure qui entoure le perçage axial (3) forme une première surface de serrage (16) pour le tronçon de tige (4) du corps en rotation (5),
- dans lequel la douille de serrage (1) comprend un second tronçon terminal axial (20) avec une région radiale intérieure (22) dont la périphérie intérieure qui entoure le perçage axial (3) forme une seconde surface de serrage (26) pour le tronçon de tige (4) du corps en rotation (5),
- dans lequel la douille de serrage (1) comprend un tronçon médian (30) situé entre le premier tronçon et le second tronçon terminal axial est incluant une masse d'inertie (32),
- dans lequel un premier tronçon d'articulation (40) est prévu entre le premier tronçon terminal axial (10) et le tronçon médian (30),
- dans lequel un second tronçon d'articulation (50) est prévu entre le tronçon médian (30) et le second tronçon terminal axial (20), et
- dans lequel la douille de serrage (1) est pourvue d'au moins une fente radiale (80, 82, 84 ; 90, 92, 94) dans le premier tronçon terminal axial (10), dans le second tronçon terminal axial (20) et dans le tronçon médian (30),
**caractérisé en ce que**
- le premier tronçon terminal (10) comporte une région radiale extérieure (14) qui est reliée à la région radiale intérieure associée (12) au moyen d'un troisième tronçon d'articulation, et/ou
- le second tronçon terminal (20) comporte une région radiale extérieure (24) qui est reliée à la région radiale intérieure associée (22) au moyen d'un quatrième tronçon d'articulation (70), et
- l'une des régions radiales extérieures (24) est susceptible de se déplacer en direction axiale, tandis que l'autre région radiale extérieure (14) est stationnaire en direction axiale.

2. Dispositif de serrage selon la revendication 1,
**caractérisé en ce que** le troisième tronçon d'articulation (60) et le quatrième tronçon d'articulation (70) sont respectivement formés par une barrette de forme annulaire (13 ; 23) qui est située, vue en direction axiale, entre les surfaces de serrage (16 ; 26) du tronçon terminal axial associé (10 ; 20) et le premier ou respectivement le second tronçon d'articulation voisin (40 ; 50).

3. Dispositif de serrage selon la revendication 1 ou 2,
**caractérisé en ce que** le tronçon d'articulation respectif (40 ; 50) est formé par une région (46 ; 56) qui présente un diamètre réduit par rapport au tronçon terminal respectif (10 ; 20) et au tronçon médian (30).

4. Dispositif de serrage selon la revendication 3,
**caractérisé en ce que** la région respective (46 ; 56) à diamètre réduit comporte une gorge périphérique (44 ; 54).

5. Dispositif de serrage selon l'une des revendications précédentes, **caractérisé en ce que** la fente radiale respective (80, 82, 84 ; 90, 92, 94) s'étend sur la totalité du diamètre de la douille de serrage (1).

6. Dispositif de serrage selon la revendication 5,
**caractérisé en ce que** la douille de serrage (1) comporte une pluralité de fentes radiales (80, 82, 84 ; 90, 92, 94), qui sont respectivement situées dans un plan passant par l'axe longitudinal (X) de la douille de serrage (1).

7. Dispositif de serrage selon la revendication 6,
**caractérisé en ce que** les plans des fentes (80, 82, 84 ; 90, 92, 94) sont agencés en direction périphérique en décalage les uns par rapport aux autres et à un écart angulaire régulier.

8. Dispositif de serrage selon la revendication 5, 6 ou 7,
**caractérisé en ce qu'**un premier groupe (8) de fentes (80, 82, 84) débouche sur la face frontale du premier tronçon terminal axial (10) de la douille de serrage (1), et les fentes (80, 82, 84) s'étendent jusque dans le second tronçon terminal axial (20), et
- **en ce qu'**un second groupe (9) de fentes (90, 92, 94) débouche sur la face frontale du second tronçon terminal axial (20) de la douille de serrage (1), et les fentes (90, 92, 94) s'étendent jusque dans le premier tronçon terminal axial (10).

9. Dispositif de serrage selon la revendication 8,
**caractérisé en ce que** les fentes (80, 82, 84) du premier groupe (8) sont agencées en direction périphérique entre les fentes (90, 92, 94) du second groupe.
